# EUROPEAN PATENT APPLICATION

(11) **EP 2 159 748 A1**
(43) Date of publication of application: **03.03.2010**
(21) Application number: 09167680.9
(22) Date of filing: 12.08.2009
(51) Int. Cl.: G06Q 30/00

(54) **System and method for providing topic-guided broadening of advertising targets in social indexing**

(30) Priority: 28.08.2008 US 92736 P; 05.05.2009 US 436060
(71) Applicant: Palo Alto Research Center Incorporated, Palo Alto, California 94304 (US)
(72) Inventor: Stefik, Mark J, Portola Valley, CA 94028 (US); Lee, Lawrence, Menlo Park, CA 94025 (US); Greene, Daniel H, Sunnyvale, CA 94087 (US); Chi, Ed H, Palo Alto, CA 94306 (US)
(74) Representative: Skone James, Robert Edmund

(57) **Abstract**

A computer-implemented system and method for providing topic-guided broadening of advertising targets in social indexing is provided. Articles of digital information and one or more social indexes (11) are maintained. Each social index includes topics that each relate to one or more of the articles. A Web page, which includes one or more of the articles, is identified. The one or more topics in at least one of the social indexes related to the one or more articles are determined (42). A plurality of advertising expressions that are each associated with advertising content for an online advertiser are received (43). Each of the advertising expressions is successively matched (44) to the one or more topics related to the one or more articles followed by matching words descriptive of the one or more topics.

## Description

### Field

This application relates in general to online advertising and, in particular, to a system and method for providing topic-guided broadening of advertising targets in social indexing.

### Background

Advertising for online products and services has become a primary source of revenue on the Web. Typically, online advertising is served with other Web content through various means, including, for example, banner, text, image, and pop-up advertisements. Online advertisements, for instance, may be directly included on a Web page requested by a user, or indirectly included with search results. The placement of online advertisements is often guided by the matching of key words associated with competing potential advertisements against the text of target Web pages.

Auction-based search advertising dominates the market for online advertising. Direct advertising sales, such as pioneered by Yahoo! Inc., Sunnyvale, CA, achieved only modest success. Under this model, paid commercial banner advertisements were embedded in Web pages to attract user traffic to linked-in advertiser Web sites. However, this approach had unnecessary costs, and suffered from a lack of transparency in pricing.

Advertising auctions removed the pricing hurdles by opening online advertising to near real-time inter-advertiser competition. For instance, U.S. Patent No. 6,285,987, issued September 4, 2001, the disclosure of which is incorporated by reference, discloses using computational agents to bid for space by matching key words from advertisements to Web sites. As well, Overture, a service offered by Yahoo!, first integrated advertising with online searching. Overture also uses a bidding mechanism that matches advertisements to search queries. Other approaches have since been developed. For instance, Ad Sense, offered by Google Inc., Mountain View, CA, places advertisements on different parts of a Web page as determined by auction. Advertisers bid for key words that are used to match online advertisements, or advertisements are associated with a general search query that is matched against the contents of Web pages.

Untargeted advertising places advertisements on Web pages without any nexus to the underlying content, whereas targeted advertising only places those advertisements deemed germane. Recently, effective advertisement targeting has taken new regency in response to declining click-through rates. For instance, in 2006, click-through rates on untargeted banner advertisements for major Web portal destinations, such as Yahoo!, Microsoft, and AOL, declined from 0.75% to 0.27%, while the average click-through rate across the whole Web for banner advertisements was only about 0.2%. Holahan, C., "So Many Advertisements, So Few Clicks," Business Week, Nov. 12, 2007, p. 38. This drop in click-through rates has increased interest in targeted advertisements.

Notwithstanding, effectively targeting online advertising remains a challenge. For instance, a good advertising opportunity may be missed due to a false negative in the key word targeting of advertisements to Web pages. The problem arises when information on a Web page fails to trigger key word targeting logic to propose an appropriate advertisement. In other words, an advertisement may be well suited for placement, but the key words used in matching the advertisement fail to match a notionally-related Web page. Thus, effective targeting requires consideration of more than just a Web page's content, yet conventional approaches still fall short.

For instance, U.S. Patent No. 6,269,361, issued July 31, 2001, the disclosure of which is incorporated by reference, discloses a system and method for influencing a position on a search result list generated by a search engine. A Web site promoter can define a search listing for a search result list, select search terms relevant to the promoter's Web site, and influence a position for the search listing on an Internet search engine. Alternative search terms may be suggested. Later, when a user enters the search terms, the search engine will generate a search result list with the promoter's listing in a position influenced by parameters, such as bid amount or rank value. The search terms, though, are prospectively tied to specific Web content that is provided in the search result list.

U.S. Patent Publication No. 2004/0059708, published March 25, 2004, the disclosure of which is incorporated by reference, discloses a method and apparatus for serving relevant advertisements. Targeting information for an advertisement is identified by analyzing the content of a target document to identify a list of topics. Targeting information is compared to the topics list, and to determine that the advertisement is relevant to the target document. The topics, however, are typically defined by someone else, can have errors, and are often imprecise, even though bids are accepted by topic.

U.S. Patent Publication No. 2007/0260508, published November 19, 2007, the disclosure of which is incorporated by reference, discloses organizing advertisement listing information in a hierarchical structure. Prices and pricing rules are assigned to nodes in a hierarchy. Bid amounts are submitted according to node level, and Web content and advertisements are served within the hierarchical structure. Advertisers must switch over to a node-and-hierarchy approach when bidding even though the hierarchical organization and mode labels could have changed without notice and thus render a bid moot.

User profile information has also been used to improve targeting, such as user location, content of Web pages visited, and previous searches. User information can be stored persistently as a targeting profile. Alternatively, information over multiple visits and Web sites can be aggregated to profile a user's interests. Profile information, though, can be considered objectionably invasive, as recently highlighted by privacy advocates who have begun petitioning for federal regulation.

For instance, U.S. Patent No. 6,285,987, issued September 4, 2001, the disclosure of which is incorporated by reference, discloses an Internet advertising system. A central server stores both advertisements and information about viewers, characteristics of Web sites, and other information relevant to deciding which advertisements should be displayed to particular viewers including demographic information and information as to what other sites the view has accessed in various time periods. Advertiser bids are evaluated in real time based on user profile characteristics.

Accordingly, what is needed is a way to effectively, yet broadly target advertisements to online information without violating the privacy of users.

### Summary

Key words are matched against articles to determine targeting using a social index that is trained by example. Once trained, the social index associates articles with the topical categories of the index. When articles are grouped under a topic, words from multiple articles can be combined to make a larger "target" for key word matching and bidding. Thus, an article can match key words if any of the articles under the article's topic matches the key words.

One embodiment provides a computer-implemented system and method for providing topic-guided broadening of advertising targets in social indexing. Articles of digital information and one or more social indexes are maintained. Each social index includes topics that each relate to one or more of the articles. A Web page, which includes one or more of the articles, is identified. The one or more topics in at least one of the social indexes related to the one or more articles are determined. A plurality of advertising expressions that are each associated with advertising content for an online advertiser are received. Each of the advertising expressions is successively matched to the one or more topics related to the one or more articles followed by matching words descriptive of the one or more topics.

A further embodiment provides a system and method for providing topic-guided broadening of advertising targets in social indexing. A set of topics is maintained in an online community index. A set of top characteristic words for each index topic is also maintained. Advertising services provide advertisements and key words for placement on online information resources. An advertisement server provides a topic engine, which targets advertisements to users of the online community by matching the advertisement key words to characteristic words associated with the community index topics.

The embodiments provide several advantages over conventional approaches. First, false negatives are reduced in a principled way because multiple articles under a topic can be considered for targeting advertisements. Second, no privacy violation occurs, as there is no requirement for tracking users across sites or profiling users' individual reading habits. Instead, the system uses data about a community and about topics for targeting, rather than information about an individual's behavior.

Still other embodiments will become readily apparent to those skilled in the art from the following detailed description, wherein are described embodiments by way of illustrating the best mode contemplated. As will be realized, other and different embodiments are possible and the embodiments' several details are capable of modifications in various obvious respects, all without departing from their spirit and the scope. Accordingly, the drawings and detailed description are to be regarded as illustrative in nature and not as restrictive.

### Brief Description of the Drawings

FIGURE 1 is a block diagram showing an exemplary environment for digital information sensemaking and information retrieval.
FIGURE 2 is a functional block diagram showing principal components used in the environment of Figure 1.
FIGURE 3 is a flow diagram showing a method for providing topic-guided broadening of advertising targets in social indexing in accordance with one embodiment.
FIGURE 4 is a flow diagram showing a routine for creating coarse-grained topic models for use with the routine of FIGURE 3.
FIGURE 5 is a flow diagram showing a routine for optionally adjusting characteristic word score for use with the routine of FIGURE 4.
FIGURE 6 is a flow diagram showing a routine for matching advertising expressions to articles for use with the method of FIGURE 3.
FIGURE 7 is a flow diagram showing a routine for presenting an online advertisement with an article for use with the method of FIGURE 3.
FIGURE 8 is a screen shot showing, by way of example, a user interface with online advertising provided with an article and a social index.
FIGURE 9 is a screen shot showing, by way of example, a user interface with tabularly-organized articles.

### Detailed Description

### Glossary

Unless indicated otherwise, terms have the following meanings:
*Advertising expression:* A set of key words, patterns, or other advertisement-descriptive information that can be used by targeting logic to match online advertisements to notionally-related documents.
*Cited page:* A location within a document to which a citation in an index, such as a page number, refers. A cited page can be a single page or a set of pages, for instance, where a subtopic is extended by virtue of a fine-grained topic model for indexing and the set of pages contains all of the pages that match the fine-grained topic model. A cited page can also be smaller than an entire page, such as a paragraph that matches a fine-grained topic model.
*Coarse-grained topic model:* A topic model based on characteristic words or similarly broadly discriminating criteria that is used in deciding which topics correspond to a query. Coarse-grained topic models can be expressed as a set of characteristic words, which are important to a topic, and a score indicating the importance of each characteristic word. This topic model can also be created from positive training examples, plus a baseline sample of articles on all topics in an index. The baseline sample establishes baseline frequencies for each of the topics and the frequencies of words in the positive training examples are compared to the frequencies in the baseline samples. In addition to use in generating topical sub-indexes, coarse-grained topic models can be used for advertisement targeting, noisy article detection, near-miss detection, and other purposes.
*Community:* A group of people sharing main topics of interest in a particular broadly defined subject area online and whose interactions are intermediated, at least in part, by a computer network. *Augmented community:* A community that has a social index on a subject area. The augmented community participates in reading and voting on documents within the subject area that have been cited by the social index.
*Corpus:* An online collection or set of Web pages; electronically-stored articles, documents, publications, files, or books; or other digital information.
*Document:* An individual item of information, typically, an article, within a corpus. A document can also include a chapter or section of a book, or other subdivision of a larger work and may contain several pages on different topics.
*Evergreen index:* An evergreen index is a social index that continually remains current with the corpus.
*Fine-grained topic model:* A topic model based on finite state computing that is used to determine whether an article falls under a particular topic. Fine-grained topic models can be expressed as finite-state patterns, similar to search queries and can be created by training a finite state machine against positive and negative training examples.
*Information diet:* An information diet characterizes the information that a user "consumes," that is, reads across subjects of interest. Given a social indexing system, the user may join or monitor a separate augmented community for each of his major interests in his information diet.
*Online advertisement:* Content in the form of banner, text, image, pop-up, or other display means that is provided with or embedded in a document to attract user traffic to linked-in cited, or referenced advertiser Web sites or documents.
*Sensemaking:* Sensemaking is the process by which users go about understanding the world. Digital sensemaking is sensemaking intermediated by a digital infrastructure, such as today's Web and search engines. Digital sensemaking typically involves activities for gathering, extracting, and organizing information.
*Social indexing system:* An online information exchange infrastructure that facilitates information exchange among augmented communities, provides status indicators, and enables the passing of documents of interest from one augmented community to another. An interconnected set of augmented communities form a social network of communities. The information exchange can include advertising.
*Subject area:* The sub set of related, generally hierarchically-organized topics and subtopics categorized in a social index, which can include an evergreen index or its equivalent.
*Subtopic:* A single entry hierarchically listed under a topic within a social index. In an evergreen index, a subtopic is also accompanied by a fine-grained topic model that generally reflects greater discriminating ability than used by a parent topic.
*Topic:* A single entry within a social index. In an evergreen index, a topic is accompanied by a fine-grained topic model, such as a pattern, that is used to match documents within a corpus.

### Digital Information Sensemaking and Retrieval Environment

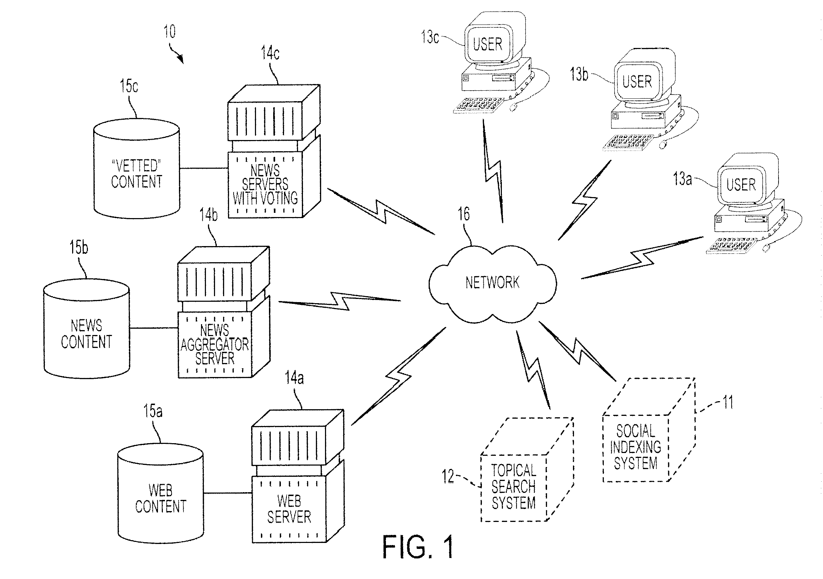

Digital information sensemaking and retrieval are related, but separate activities. The former relates to sensemaking mediated by a digital information infrastructure, which includes public data networks, such as the Internet, standalone computer systems, and open-ended repositories of digital information. The latter relates to the searching and mining of information from a digital information infrastructure, which may be topically organized through social indexing, or by other indexing source. FIGURE 1 is a block diagram showing an exemplary environment 10 for digital information sensemaking and information retrieval. A social indexing system 11 and a topical search system 12 work in tandem to respectively support sensemaking and retrieval.

In general, digital information is a corpus of information available in digital form. The extent of the information is open-ended, which implies that the corpus and its topical scope grow continually without fixed bounds on either size or subject matter. A digital data communications network 16, such as the Internet, provides an infrastructure for exchange of the digital information. Other network infrastructures are also possible, for instance, a non-public corporate enterprise network.

The network 16 provides interconnectivity to diverse and distributed information sources and consumers that respectively populate and access the corpus. Authors, editors, collaborators, and outside contributors continually post articles, Web pages, and the like to the network 16, which are maintained as a distributed data corpus through Web servers 14a, news aggregator servers 14b, news servers with voting 14c, and other information sources. These sources respectively serve Web content 15a, news content 15b, community-voted or "vetted" content 15c, and other information to users that access the network 16 through user devices 13a-c, such as personal computers, as well as other servers. For clarity, only user devices will be mentioned, although servers and other non-user device information consumers may similarly search, retrieve, and use the information maintained in the corpus.

In general, each user device 13a-c is a Web-enabled device that executes a Web browser or similar application, which supports interfacing to and information exchange and retrieval with the servers 14a-c. Both the user devices 13a-c and servers 14a-c include components conventionally found in general purpose programmable computing devices, such as a central processing unit, memory, input/output ports, network interfaces, and non-volatile storage. Other components are possible. Moreover, other information sources in lieu of or in addition to the servers 14a-c, and other information consumers, in lieu of or in addition to user devices 13a-c, are possible.

Digital information retrieval complements sensemaking. In one embodiment, a topical search system 12 is integrated into a social indexing system 11. The topical organization provided by the social indexing system 11 can be used advantageously by the topical search system 12, although other sources of indexing could also be used. Search queries from user devices 13a-c are executed against either all of the social indexes or a single focused index, and a dynamically focused and topically-related set of indexes and their top topics, or the top topics within the single focused index are respectively generated by the topical search system 12 for presentation with search results, such as disclosed in commonly-assigned U.S. Patent application Serial No. 12/354,681, filed January 15, 2009, pending, the disclosure of which is incorporated by reference. In addition, online advertising can be blended into topical searching and other retrieval activities by broadening the targeting used in landing advertisements on retrieved information through the topically-structured aspects of social indexing.

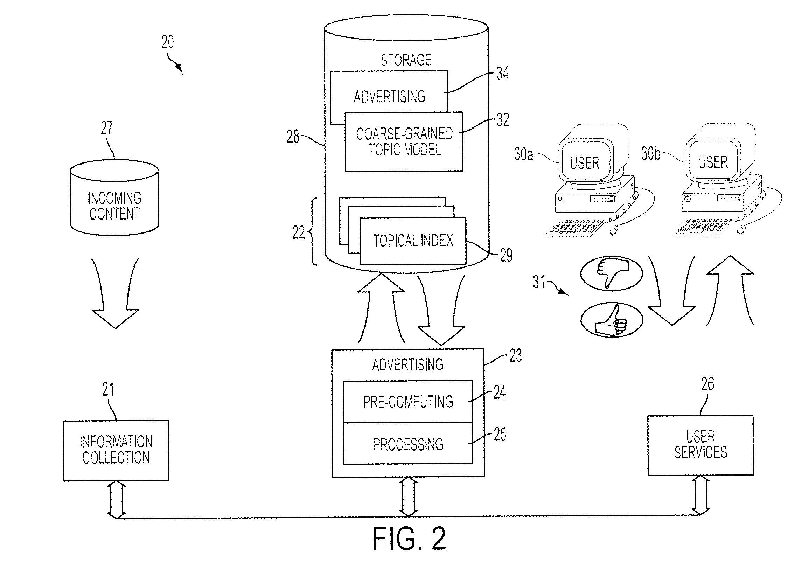

From a user's point of view, the environment 10 for retrieval appears as a single information portal, but behind the scenes is a set of logically separate but integrated services. Online advertising is introduced as an add-on to retrieval. FIGURE 2 is a functional block diagram showing principal components 20 used in the environment 10 of FIGURE 1. The components are focused on online advertising. Additional components or functional modules may be required to provide other related activities, such as discovery, prospecting, and orienting.

The components 20 can be loosely grouped into information collection 21, advertising 23, and user services 26 modules implemented on the same or separate computational platform. The information collection module 21 obtains incoming content 27 from the open-ended information sources. The incoming content 27 is collected by a media collector, which continually harvests new digital information from the corpus. The incoming content 27 can be stored in a structured repository, or indirectly stored by saving hyperlinks or citations to the incoming content in lieu of maintaining actual copies. Additionally, the incoming content 27 can include multiple representations, which differ from the representations in which the information was originally stored. Different representations could be used to facilitate displaying titles, presenting article summaries, keeping track of topical classifications, and deriving and using fine-grained topic models. Words in the articles could also be stemmed and saved in tokenized form, minus punctuation, capitalization, and so forth. Moreover, the fine-grained topic models created by the social indexing system 11 represent fairly abstract versions of the incoming content 27, where many of the words are discarded and word frequencies are mainly kept.

The incoming content 27 is preferably organized through social indexing under at least one topical social index 29, which may be part of a larger set of topical indexes 22 that covers all or most of the information in the corpus. In a further embodiment, the topical index 29 could be an evergreen index built through a social indexing system, such as described in commonly-assigned U.S. Patent Application, entitled "System and Method for Performing Discovery of Digital Information in a Subject Area," Serial No. 12/190,552, filed August 12, 2008, pending, the disclosure of which is incorporated by reference. The evergreen index contains fine-grained topic models, such as finite state patterns, that can be used to test whether new incoming content 27 falls under one or more of the index's topics. The social indexing system applies supervised machine learning to bootstrap training material into the fine-grained topic models for each topic and subtopic in the topical index 29. Once trained, the evergreen index can be used for index extrapolation to automatically categorize new information under the topics for pre-selected subject areas.

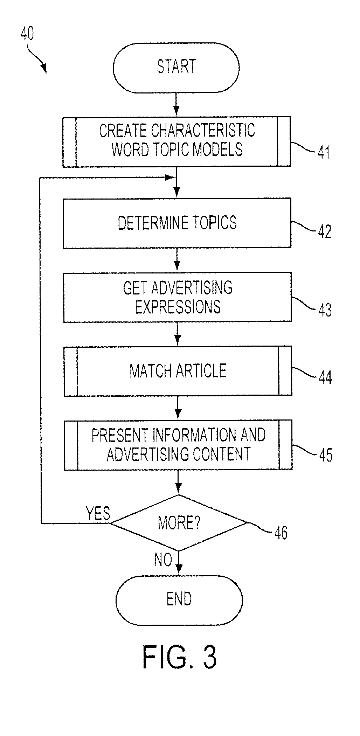

The advertising module 23 broadens targeting of online advertising, as further described below beginning with reference to FIGURE 3. The advertising module 23 includes a pre-computing submodule 24 that creates a coarse-grained topic model 32, also known as a characteristic word topic model, for the topics in each topical index 29. The advertising module 23 also includes a processing submodule 25 that is coupled to a search engine (not shown). The processing submodule 25 matches advertising content 34 to an identified article based on either the content of the article itself or through information relating to the article's topic within the index. The article and most closely matching advertising are then visually displayed to the user through a user interface. In a further embodiment, online advertising could also be targeted to specific social communities whose topics reflect an interest most closely matched to the interests of particular advertisers, such as described in commonly-assigned U.S. Patent Application, entitled "System and Method for Providing Community-Based Advertising Term Disambiguation," Serial No. 12/436,067, filed May 5, 2009, pending, the disclosure of which is incorporated by reference. The coarse-grained topic model 32 for each topical index 29 and the set of topical indexes 22 are maintained in centralized storage 28.

Finally, the user services module 26 provides a front-end to users 30a-b to access the set of topical indexes 22 and the incoming content 27, to perform search queries on the set of topical indexes 22 or just a single topical index 29, and to access search results. In a still further embodiment, each topical index 29 is tied to a community of users, known as an "augmented" community, which has an ongoing interest in a core subject area. The community "vets" information cited by voting 30 on articles categorized under each topic.

### Online Advertising

In the life cycle of an online advertisement, three events are relevant to earning advertising revenue. First, a presentation event occurs whenever an advertisement is displayed on a Web page. The count of displays, or impressions, is the basis for computing according to a CPM (cost per thousand or "mille" impressions) price model. Second, click-through event occurs whenever a user clicks on a displayed advertisement. The count of click-through events is usually the basis for computing revenues according to a CPC (cost per click) price model. Third, a conversion event occurs whenever a user takes an action on an advertiser's site, such as registering or purchasing a product. Generally, advertisers keep statistics on conversion events to estimate what they are willing to pay for CPM or CPC advertisements based on a projection of expected conversion rates and potential revenue.

Both targeting to appropriately-matched content and properly placing online advertisements within matching Web pages influence revenue potential. Revenue opportunity can be lost through ineffective targeting, and poorly-placed advertisements may be obscured, overlooked, or simply ignored. A social index can both improve targeting and enhance placement of online advertisements. Social indexing displays articles in a topically-organized subject area that helps users to quickly access information on topics that they specify. Moreover, a social index is used by a community that organizes articles of interest to an audience larger than a single user. A social index can thus be used in online advertising to target advertisements to information services that partition users into such communities, thereby increasing advertising revenue potential while avoiding invasive user profiling practices.

### Method

Advertising may be presented with topical search results, or in concert with other activities. For example, a user may be following stories or topics that appear on a news page, or on topics that appear in indexes that appear on a Web page serving their information diet. Both of these starting points take a user deeper into the organized information of a social index and any page that displays information by topic is a potential locus for advertising. In general, the deeper a user goes into a social index, the more specialized the topic becomes and the greater the potential for high-precision targeting of advertisements. The path to this information can be via a direct article lookup, by performing a topical search, as the result of following an informational or topical trail, or by some other manner of seeking and accessing information.

Accordingly, to improve targeting and advertisement placement effectiveness, online advertising can be directed to online communities using community information from shared topical social indexes. Each social index aggregates content analysis across topically-related articles, which have been grouped under the same index topic. Thus, advertising targeted to one article can be broadened, when appropriate, by referencing the topical grouping of the index, rather than targeting advertising based solely on the words appearing on a given Web page or user profile. FIGURE 3 is a flow diagram showing a method 40 for providing topic-guided broadening of advertising targets in social indexing in accordance with one embodiment. The method 40 is performed as a series of process or method steps performed by, for instance, a general purpose programmed computer, such as a server.

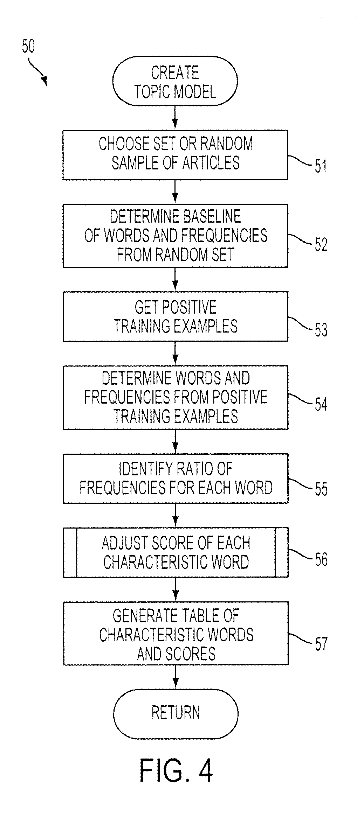

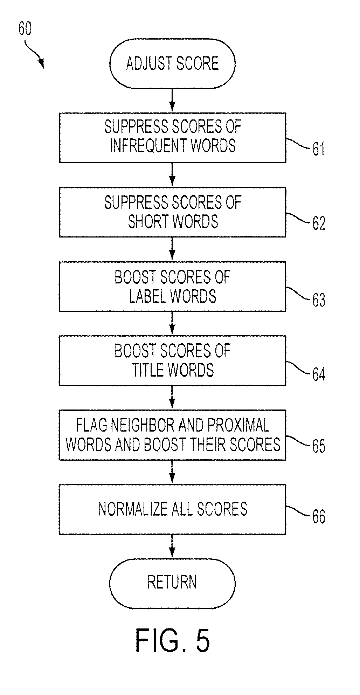

The approach improves advertising revenue by reducing false-negatives in targeting using social community information. The method 40 is performed in two stages. First, during a pre-computing stage, coarse-grained topic models, that are, characteristic word topic models, are created for the topics listed in each of the social indexes (step 41), as further described below with reference to FIGURES 4 and 5. Each coarse-grained topic model identifies words that are important for and reflective of each topic. The coarse-grained topic models include a measure or score of the relative importance of each characteristic word identified.

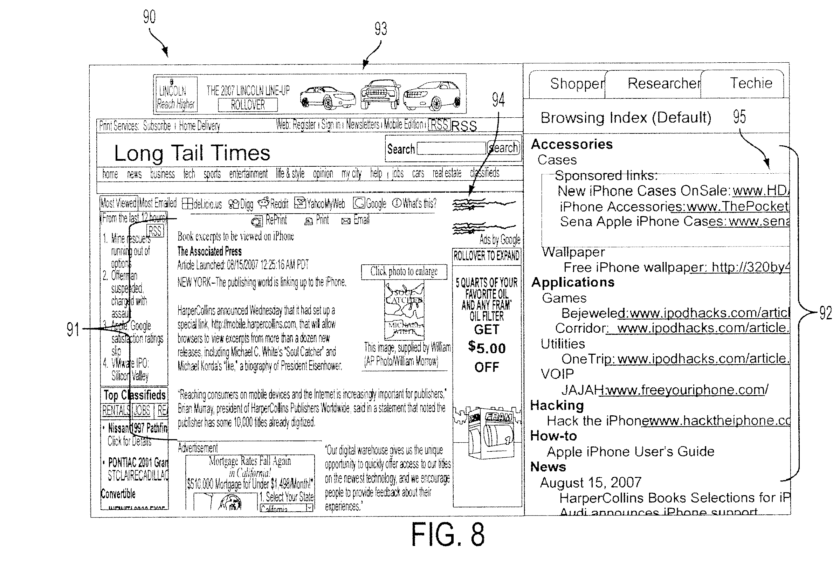

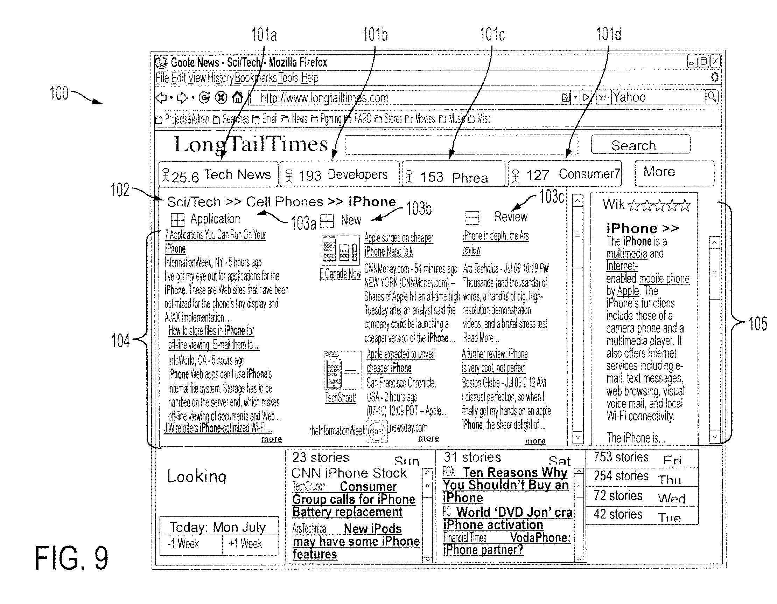

Second, online advertising requests are processed (steps 42-46). The form of the advertising request is not critical and can be competitive or direct purchased. For instance, the requests can be competitive bids for advertising placement through an auction-style format, selections from a collective pool of standing requests for online advertising, or by any other form of advertising request. The topics implicated by the information request (step 42), whether topics relating to specific content or search results, or more generally topics as found in a section of a topic tree, becomes the target for guiding placement of advertising content. Targeting can be directed to, for instance, topics connected with a Web page containing articles and a social index or tabularly-organized articles, such as further described below respectively with reference to FIGURES 8 and 9. Each online advertisement includes content that is placed on a Web page and displayed, and an advertising expression, which is used to target or match the content to appropriate articles. The advertising expression is generally a set of key words and can include word stems, synonyms, and other forms of generalizations. The advertising expressions for each of the online advertisements are first retrieved (step 43), then matched to the topics for the information requested (step 44), as further described below with reference to FIGURE 4. The most closely matched advertising expression is identified and the information and advertising content are presented (step 45), as further described below with reference to FIGURE 5. The online advertising request processing stage (steps 42-46) is performed repeatedly for each information request (step 46).

### Pre-Computing Stage

The pre-computing stage can be performed independently of and prior to the online advertising request processing. Coarse-grained topic models are generated during the pre-computing stage and these topic models are used, when appropriate, to broaden the targeting of online advertising. FIGURE 4 is a flow diagram showing a routine 50 for creating coarse-grained topic models for use with the routine 40 of FIGURE 3. The coarse-grained topic models contain characteristic words and a score that reflects the relative importance of each characteristic word.

Characteristic words are useful in discriminating text about a topic and are typically words selected from the articles in the applicable corpus, which can include Web pages, electronic books, or other digital information available as printed material. Initially, a set or random sampling of articles is selected out of the corpus (step 51). A baseline of characteristic words and their frequencies of occurrence are extracted from the articles selected (step 52). Baselines for topics in an index 29 are determined over the corpus of the index 29. Baselines for the complete set of indexes 22 are computed over the overall system corpus, which is the corpora for all of the individual indexes 29. To reduce latency, the frequencies of occurrence of each characteristic word in the baseline can be pre-computed. In one embodiment, the number of articles appearing under the topics in an index is monitored, such as on an hourly basis. Periodically, when the number of articles has changed by a predetermined amount, such as ten percent, the frequencies of occurrence are re-determined.

Next, a set of positive training examples, as generally selected by a user, is obtained (step 53). The positive training examples can be the same set of articles used during supervised learning when building fine-grained topic models for an evergreen index, described *supra*. In a further embodiment, a sampling of articles that match the fine-grained topic models could be used in lieu of the positive training examples. Characteristic words are extracted from the positive training examples and the frequency of occurrence of each characteristic word in the positive training examples is determined (step 54). A measure or score is assigned to each characteristic word using, for instance, term frequency-inverse document frequency (TF-IDF) weighting, which identifies the ratio of frequency of occurrence of each characteristic word in the positive training examples to the frequency of occurrence of each characteristic word in the baseline (step 55). The score of each characteristic word can be adjusted (step 56) to enhance or discount the importance of the characteristic word to the topic, as further described below with reference to FIGURE 5. Finally, a table of the characteristic words and their scores is generated (step 57) for use in the online advertising request processing stage. The table can be a sorted or hashed listing of the characteristic words and their scores. Other types of tables or listings are possible.

Different "actors" perform the actions in creating coarse-grained models. The system chooses a set or random sampling of articles, and determines a baseline. An index manager, who can be a person, chooses positive training examples. The remaining steps are performed by the system. The selection of positive training examples can be completed ahead of time and prior to any other steps in the routine. The routine takes as input a set of articles in a corpus, and a set of articles from the corpus that have been designated as positive training examples. The same observation holds where the positive training examples are articles that match the fine-grained models. Here, the fine-grained models come from a "default training algorithm," which creates fine-grained patterns based on topic labels, such as further described in commonly-assigned U.S. Patent Application, Serial No. 12/360,825, filed January 27, 2009, pending, the disclosure of which is incorporated by reference. These two approaches to creating fine-grained topic models are called "default topic training" and "example-based topic training."

The score of each characteristic word reflects a raw ratio of frequencies of occurrence. FIGURE 5 is a flow diagram showing a routine 60 for optionally adjusting characteristic word score for use with the routine 50 of FIGURE 4. Heuristically, the score of each characteristic word can be adjusted in several ways depending upon context. For instance, the scores of infrequent words, that is, words that appear fewer than a minimum number of times in the corpus or in the set of cited materials can by suppressed or reduced (step 61) by, for example, 25 percent. Similarly, the scores of words with a length of less than a minimum threshold of characters can be suppressed (step 62) by a similar percent, as short words are not likely to have high topical significance. Conversely, words that appear in labels or in titles reflect strong topicality and their scores are boosted or increased (steps 63 and 64, respectively) by the number of times that the word appears in the sample. Typically, all label words are included as characteristic words. Lastly, the scores of words appearing adjacent to label words, that is, neighboring words, and "proximal" words appearing around label words within a set window are boosted (step 65). Normalized thresholds are applied during neighboring and proximal word selection. Default thresholds of eight and fifteen percent of the maximum score are respectively applied to neighboring and proximal words with a set window size of eight words. Other representative thresholds and lengths can be used. Finally, the scores of the characteristic words are normalized (step 66). The characteristic word having the highest score is also the most unique word and that score is set to 100 percent. The scores of the remaining characteristic words are scaled based on the highest score. Thus, upon the completion of characteristic word selection, each topic in the index has a coarse-grained topic model, which has been expressed in terms of characteristic words that have been normalized over the materials sampled from the corpus.

### Online Advertising Request Processing

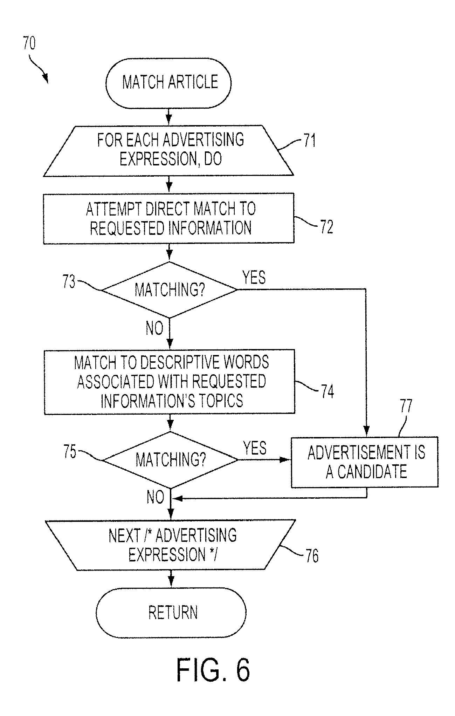

Online advertising is matched to user-identified content using advertising expressions. FIGURE 6 is a flow diagram showing a routine 70 for matching advertising expressions to articles for use with the method 40 of FIGURE 3. Each advertising expression is iteratively processed (blocks 71-76). Matching occurs in two phases. Initially, each advertising expression, generally key words descriptive of the advertising content, are attempted to be directly matched to the information requested by the user (step 72), which can be a specific article, a set of articles appearing in a selected Web page, a set of search results, and the like. If matching (step 73), the advertisement is deemed a candidate for placement (step 77) and request processing is complete.

However, if the advertising expression fails to expressly match the requested information (step 73), targeting is broadened with the assistance of a social index through a social community to which the user belongs. Each advertising expression is attempted to be indirectly matched to descriptive words associated with the requested information's topics in the social index (step 74). The requested information is displayed on a Web page and advertising requests are matched to via the Web page to topics in social indexes to which each user belongs through a social community. User intent guides topic broadening and the information displayed to a user provides a signal of intent. For instance, intent can be determined from a user request to retrieve a particular article or set of articles, or from a more generalized user request, such as a search query. Each of the articles or search query results matches topics under the social index. Similarly, intent can be reflected by an expanded part of a topic tree for the social index to which the user belongs, which shows the user's implied interest in a particular set of topics. Other signals of user intent are possible.

Advertising requests are matched to words that are descriptive of the inferred topics. For instance, the descriptive words can include all of the words in each of the articles indexed under the topics that correspond to the articles on a particular Web page, or may be only the characteristic words determined for the topics. If a broader user intent applies, such as implied by a selected part of the topic tree for the social index, the characteristic words are determined based on the selected topics. Other forms of descriptive words for the topics are also possible. If matching (step 75), the advertisement is deemed a candidate for placement (step 77). Processing continues with each of the remaining advertising expressions (step 76).

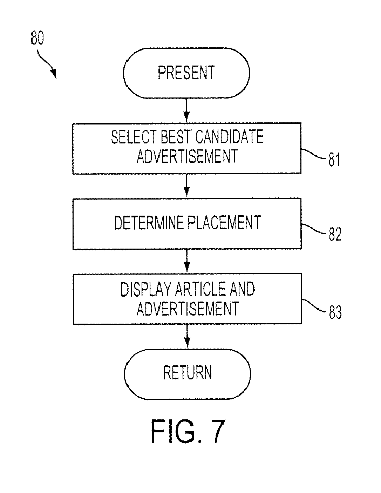

Due to the space constraints, only a limited number of online advertisements can be included with the information requested by the user. FIGURE 7 is a flow diagram showing a routine 80 for presenting an online advertisement with an article for use with the method 40 of FIGURE 3. Preferably, the best candidate advertisement is selected (step 81) by the advertising module 23 (shown in FIGURE 2) or other server. The best candidate advertisement could be the online advertisement that most closely matches either the requested information itself or the descriptive words associated with the requested information's topic in the social index.

In a further embodiment, the best candidate advertisement to chosen by considering not only the matching key words, but also the statistical click-through rate. The purpose is to ignore advertisements with high bids that are rarely selected or "clicked" by users. The system keeps statistics on how often users click on advertisements and the best candidate advertisement can be selected to maximize advertising revenue, such as by multiplying an estimate of the click-through rate by the advertisement's bid. Topics can also be factored into advertisement selection. Parent topics surround a given topic as successively larger targets and user communities. Statistics on an advertisement, or on related collections of advertisements, can be determined in each of the concentric circles of communities. Each time the system "broadens" the scope of the target, the scope of the statistics are also broadened. When choosing which advertisement to run, the system considers multiple advertisements competing over a series of competing circles before choosing an advertisement to maximize revenue.

Often, no data on which to base estimates of click-through rates is available at the beginning of an advertising campaign. As the campaign starts, sporadic clicks may occur, but not necessarily on exactly the same Web page as currently under consideration for placement of the best candidate advertisement. To bootstrap the selection process and provide click-through estimation data, statistics from multiple pages can be aggregated. For example, statistics can initially be aggregated across all social indexes. As statistics build up, the statistics can be aggregated only for social index to which the Web page belongs, but across all topics. As statistics build up further, the statistics can be aggregated across top-level topics. Continuing, at each stage, as statistics accrue, the zone of aggregation will become smaller. Finally, statistics can be aggregated over individual topics. Presumably, the stats are most accurate when most narrow.

Other best candidate advertisement selection criteria could also be applied. In a still further embodiment, a plurality of the most closely matching candidate advertisements are selected, such as the top five advertisements.

Placement within the requested information is then determined (step 82) by the advertising module 23 or other server, such as a third party advertising placement server. Where advertisers compete through an auction-style format, placement may be driven by the form of cost model bid. For instance, for a CPM cost model, the advertising content may be placed alongside a particular article, while advertising content for a CPC cost model may be placed either alongside the article or near the topic identified within the social index. As well, advertising content for a cost-per-conversion cost model may be placed within view of the article. Other forms of cost model and advertising content placement are possible. Finally, the article and advertisement are displayed (step 83).

### Examples

Within the context of a social index, advertising content can be presented to advantageously leverage the topical organization and community-oriented display of information. FIGURE 8 is a screen shot 90 showing, by way of example, a user interface with online advertising provided with an article 91 and a social index 92. The article 91 represents specific information requested by a user, while the social index 92 provides the accompanying hierarchical topical organization scheme within which the article 91 is associated. Within the overall display, conventional banner advertisements 93 can be presented, as well as advertising content placed alongside 94 of the article 91 or within 95 the social index 92 itself.

Other layouts or arrangements of information for a social index are possible. For instance, FIGURE 9 is a screen shot 100 showing, by way of example, a user interface with tabularly-organized articles 104. The user interface includes user-selectable tabs 101a-d for each of four user communities, "Tech News," "Developers," "Phreaks," and "Consumer7." Each of these communities has an associated social index with different perspectives and interests particularized to the community. Within each tab, articles 104 are arranged in columns corresponding to topics in the social index. For instance, the "Tech News" tab includes abstracts of articles 104 about the iPhone, a smartphone manufactured by Apple Inc., Cupertino, CA. The "iPhone" class of articles are organized under a hierarchical scheme respectively under super classes 102 "Cell Phones" and "Sci/Tech" The "iPhone" class also includes subtopics 103a-c "Applications," "New Models," and "Reviews," plus a "wiki" article 105 for each topic. The iPhone wiki article is a summary of the iPhone, written by members of the community. Based on the richer content afforded by each community-organized tab, online advertisements could be targeted according to the community and the topic, as well as the content of the articles displayed.

While the invention has been particularly shown and described as referenced to the embodiments thereof, those skilled in the art will understand that the foregoing and other changes in form and detail may be made therein without departing from the spirit and scope.

## Claims

1. A computer-implemented system for providing topic-guided broadening of advertising targets in social indexing, comprising:
articles of digital information and one or more social indexes comprising topics that each relate to one or more of the articles; and
a computer comprising a processor and memory within which code for execution by the processor is stored, comprising:
a social indexing module for identifying a Web page comprising one or more of the articles and determining the one or more topics in at least one of the social indexes related to the one or more articles; and
an advertisement processing module for receiving a plurality of advertising expressions that are each associated with advertising content for an online advertiser, and successively matching each of the advertising expressions to the one or more topics related to the one or more articles followed by matching words descriptive of the one or more topics.

2. A system according to claim 1, further comprising:
an article selection module for selecting each of the articles related to at least one of the one or more topics and related to one or more further topics identified in the social indexes, and adding each word appearing in the articles to the words descriptive for the topic identified.

3. A system according to claim 1 or claim 2, further comprising:
a model builder for building a coarse-grained topic model for the topic identified comprising characteristic words comprised in each of the articles related to at least one of the one or more topics and related to one or more further topics identified in the social indexes, and adding each characteristic word to the words descriptive for the topic identified.

4. A system according to any of the preceding claims, further comprising:
a random sampler for selecting a random sampling of the articles relating to the topic; and
a scoring module for determining frequencies of occurrence of the characteristic words comprised in the articles in the random sampling and in positive training examples, and identifying a ratio of the frequencies of occurrence for the characteristic words comprised in the random sampling and the positive training examples,
wherein the ratios of the characteristic words are included as the scores of the coarse-grained topic models.

5. A system according to claim 4, further comprising:
a monitor monitoring a number of articles comprised in the topics of the social index, and periodically re-determining the frequencies of occurrence of the characteristic words comprised in the articles in the random sampling when the number of articles has changed by a predetermined amount.

6. A computer-implemented method for providing topic-guided broadening of advertising targets in social indexing, comprising:
maintaining articles of digital information and one or more social indexes comprising topics that each relate to one or more of the articles;
identifying a Web page comprising one or more of the articles and determining the one or more topics in at least one of the social indexes related to the one or more articles;
receiving a plurality of advertising expressions that are each associated with advertising content for an online advertiser; and
successively matching each of the advertising expressions to the one or more topics related to the one or more articles followed by matching words descriptive of the one or more topics.

7. A method according to claim 6, further comprising at least one of:
choosing the advertising expression most closely matched; and
choosing the advertising expression that maximize revenue through click-through rate.

8. A method according to claim 7, wherein the topics comprised in the social index are organized in a hierarchy, further comprising at least one of:
determining the click-through rate for the advertising expressions by broadening the scope of the one or more topics through successive levels of the hierarchy.

9. A method according to claim 8, wherein the click-through rate is determined over a plurality of the social indexes, further comprising:
determining the click-through rate for the advertising expressions by broadening the scope of the one or more topics by aggregating the social indexes, in addition to the successive levels of the hierarchy of each social index.

10. A method according to any of claims 6 to 9, further comprising:
selecting each of the articles related to at least one of the one or more topics and related to one or more further topics identified in the social indexes; and
adding each word appearing in the articles to the words descriptive for the topic identified.

11. A method according to any of claims 6 to 10, further comprising:
building a coarse-grained topic model for the topic identified comprising characteristic words comprised in each of the articles related to at least one of the one or more topics and related to one or more further topics identified in the social indexes; and
adding each characteristic word to the words descriptive for the topic identified.

12. A method according to claim 11, further comprising:
assigning scores to the characteristic words and ranking the characteristic words by their scores, wherein the advertising expression chosen matches the top-ranked characteristic words.

13. A method according to any of claims 6 to 12, further comprising:
selecting a random sampling of the articles relating to the topic;
determining frequencies of occurrence of the characteristic words comprised in the articles in the random sampling and in positive training examples;
identifying a ratio of the frequencies of occurrence for the characteristic words comprised in the random sampling and the positive training examples; and
including the ratios of the characteristic words as the scores of the coarse-grained topic models.

14. A method according to claim 13, further comprising:
monitoring a number of articles comprised in the topics of the social index; and
periodically re-determining the frequencies of occurrence of the characteristic words comprised in the articles in the random sampling when the number of articles has changed by a predetermined amount.

15. A method according to claim 13 or claim 14, further comprising:
selecting a sampling of articles matching fine-grained topic models for each topic in lieu of the positive training examples.
